# EUROPEAN PATENT APPLICATION

(11) **EP 2 975 800 A1**
(43) Date of publication of application: **20.01.2016**
(21) Application number: 15155677.6
(22) Date of filing: 19.02.2015
(51) Int. Cl.: H04L 12/18

(54) **Electronic shelf label gateway, electronic shelf label system and communications method thereof**

(30) Priority: 18.07.2014 KR 20140091000
(71) Applicant: Samsung Electro-Mechanics Co., Ltd., Gyeonggi-do (KR); Seoul National University R&DB Foundation, Seoul 151-742 (KR)
(72) Inventor: Choi, Byong Hyok, Gyeonggi-Do (KR); No, Jong Seon, Seoul (KR); Hong, Seok Beom, Seoul (KR); Yang, Pil Woong, Seoul (KR); Jun, Bo Hwan, Seoul (KR); Park, Young Seo, Gyeonggi-Do (KR); Park, Ho Sung, Seoul (KR)
(74) Representative: Grünecker Patent- und Rechtsanwälte PartG mbB

(57) **Abstract**

An electronic shelf label gateway may include a data storing unit storing original data, a signal processing unit generating an encoded data packet by encoding the original data, a controlling unit controlling transmission of the encoded data packet so as to sequentially perform a first multicast, a second multicast, and a unicast of the encoded data packet until all of a plurality of connected electronic shelf label devices successfully receive the encoded data packet, and a communicating unit wirelessly transmitting the encoded data packet according to controlling by the controlling unit.

## Description

### CROSS-REFERENCE TO RELATED APPLICATION

This application claims the priority and benefit of Korean Patent Application No. 10-2014-0091000 filed on July 18, 2014, with the Korean Intellectual Property Office, the disclosure of which is incorporated herein by reference.

### BACKGROUND

The present disclosure relates to an electronic shelf label gateway, an electronic shelf label system, and a communications method thereof.

Typically, an electronic shelf label (ESL) system may include an electronic shelf label gateway and a plurality of electronic shelf label devices connected to the electronic shelf label gateway via a wireless network.

For example, an electronic shelf label gateway may perform wireless communications with the electronic shelf label device in compliance with the IEEE 802.15.4 communications standard. In this case, the electronic shelf label gateway may use a portion of a plurality of channels having a bandwidth of 5MHz in the 2.4GHz band, defined in the IEEE 802.15.4 communications standard.

The existing electronic shelf label gateway as described above divides transmitted high capacity data into a plurality of data packets and transmits the plurality of data packets. For example, in the case in which the electronic shelf label gateway broadcasts a single data packet to be transmitted to the plurality of electronic shelf label devices, the electronic shelf label gateway continuously and repeatedly broadcasts the data packet until each of the plurality of electronic shelf label devices has successfully received the data packet. For example, if the reception of the data packet is confirmed, the electronic shelf label gateway transmits a following data packet.

As such, since the number of data packets which are divided is increased in the case in which high capacity data is transmitted, and as a result, the number of transmission times of the overall data packets is increased, it may be inefficient to use the electronic shelf label devices having a limited battery lifespan.

The respective channel environments of the plurality of electronic shelf label devices are independent of one another, and if electronic shelf label devices are present in a bad channel environment, a total number of transmission times of the entire number of data packets is increased in the existing transmission scheme of data packet and consequently, it is very inefficient to use the electronic shelf label device having a limited battery lifespan.

For example, the battery lifespan may also be shortened through operations of transmitting data packets over an extended period of time. In addition, during a process in which the electronic shelf label gateway repeatedly transmits data packets until the electronic shelf label device, having failed to successfully receive the transmitted data packets have successfully received the data packets, and during a process in which the electronic shelf label device, having failed to successfully receive data packets, repeatedly performs an operation of receiving data packets, since an electronic shelf label device which has previously succeeded in receiving data packets consumes power while waiting to receive a following data packet, power consumption in the electronic shelf label device which has previously succeeded in receiving data packets may be increased, as the number of reception failures is increased. Due to the shortening of the lifespan of the battery and the increase in power consumption as described above, product reliability may be degraded.

Therefore, in a system using the electronic shelf label device having a limited battery lifespan and a limited memory capacity, there is a need to efficiently transmit data packets in connection with a method capable of reducing the number of data packet transmission times and a method capable of reducing the shortening of the lifespan of the battery.

The following Related Art Document relates to a synchronization transmission method for a plurality of reception obj ects, a system implementing the same, and a program processing the same, but does not suggest a solution for the above-mentioned problems.

### [Related Art Document]

Japanese Patent Laid-Open Publication No. 2009-217765

### SUMMARY

An exemplary embodiment in the present disclosure may provide an electronic shelf label gateway, an electronic shelf label system, and a communications method thereof able to reduce the number of data packet transmission times in a system using an electronic shelf label device having limited battery lifespan and limited memory capacity.

According to an exemplary embodiment in the present disclosure, an electronic shelf label gateway may include: a data storing unit storing original data; a signal processing unit generating an encoded data packet by encoding the original data; a controlling unit controlling transmission of the encoded data packet to sequentially perform a first multicast, a second multicast, and a unicast of the encoded data packet until all of a plurality of connected electronic shelf label devices successfully receive the encoded data packet; and a communicating unit wirelessly transmitting the encoded data packet according to controlling by the controlling unit.

According to another exemplary embodiment in the present disclosure, a communications method of an electronic shelf label gateway may include: generating an encoded data packet by encoding original data; performing a first multicast of the encoded data packet to a plurality of connected electronic shelf label devices; when electronic shelf label devices having failed to receive the encoded data packet via the first multicast are present, performing a second multicast of the encoded data packet to corresponding electronic shelf label devices; and when electronic shelf label devices having failed to receive the encoded data packet via the second multicast are present, transmitting the encoded data packet to corresponding electronic shelf label devices in a unicast scheme.

### BRIEF DESCRIPTION OF THE DRAWINGS

The above and other exemplary embodiments, features and other advantages in the present disclosure will be more clearly understood from the following detailed description taken in conjunction with the accompanying drawings, in which:
FIG. 1 is a configuration block diagram of an electronic shelf label system according to an exemplary embodiment in the present disclosure;
FIG. 2 is a block diagram of an electronic shelf label gateway according to an exemplary embodiment in the present disclosure;
FIG. 3 is a block diagram of an electronic shelf label device according to an exemplary embodiment in the present disclosure;
FIG. 4 is a flowchart illustrating a communications method of an electronic shelf label gateway according to an exemplary embodiment in the present disclosure;
FIG. 5 is a flowchart illustrating a communications method of an electronic shelf label device according to an exemplary embodiment in the present disclosure;
FIG. 6 is a flowchart illustrating a communications method of an electronic shelf label system according to an exemplary embodiment in the present disclosure;
FIG. 7 is a diagram illustrating a sequential message transmitting algorism used for an LDPC according to an exemplary embodiment in the present disclosure; and
FIG. 8 is a graph illustrating a packet error rate vs.
   an error rate of subgroup depending on a code rate according to an exemplary embodiment in the present disclosure.

### DETAILED DESCRIPTION

Exemplary embodiments in the present disclosure will now be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

First, in the respective exemplary embodiments in the present disclosure, a technology capable of reducing a power consumption amount and efficiently utilizing limited memory capacity is suggested in connection with an electronic shelf label system including an electronic shelf label device operated at a low level of power and having limited low memory capacity, a technology capable of dividing and encoding data to be transmitted to transmit the data in first and second multicasts and a unicast is suggested in connection with an electronic shelf label gateway, and a technology capable of decoding the received data to restore the data to source data in connection with the electronic shelf label device is suggested.

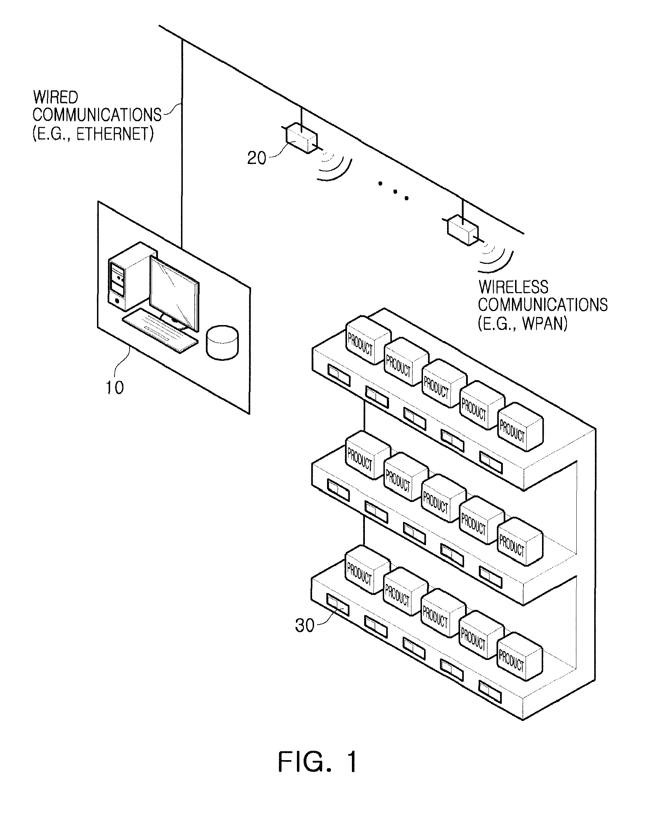

FIG. 1 is a configuration block diagram of an electronic shelf label system according to an exemplary embodiment in the present disclosure. Referring to FIG. 1, the electronic shelf label system according to an exemplary embodiment in the present disclosure may include a server 10, an electronic shelf label gateway 100, and a plurality of electronic shelf label devices 200.

The server 10 may provide product information to the electronic shelf label gateway 100 via a wired communications network (e.g., Ethernet).

The electronic shelf label gateway 100 may wirelessly transmit, for example, an encoded data packet including the product information, to the plurality of electronic shelf label devices 200 via a wireless communications network (e.g., WPAN communications).

The plurality of electronic shelf label devices 200 may respectively be connected to the electronic shelf label gateway 100 through the wireless communications network to receive the encoded data packet from the electronic shelf label gateway 100.

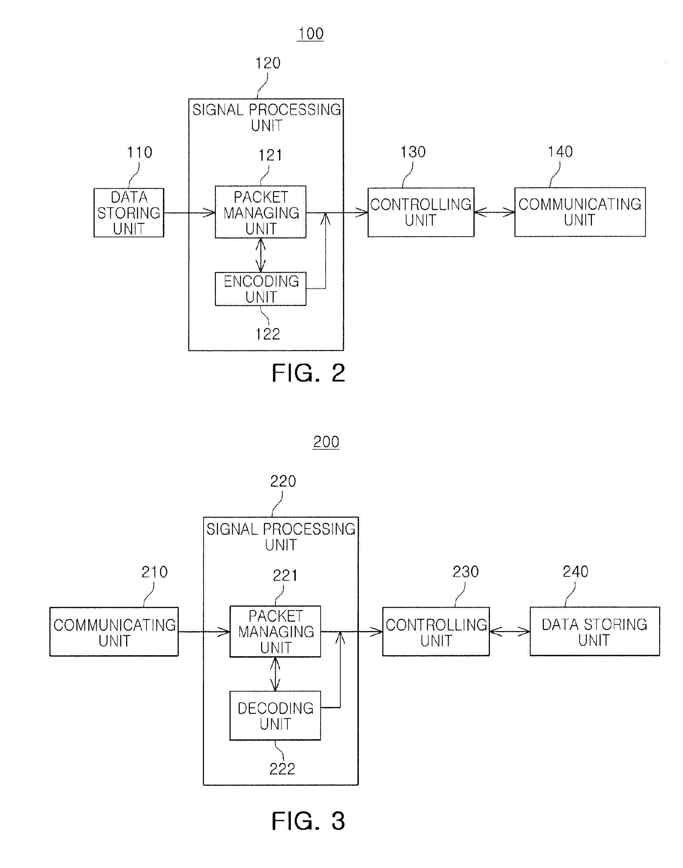

FIG. 2 is a block diagram of the electronic shelf label gateway according to an exemplary embodiment in the present disclosure.

Referring to FIG. 2, the electronic shelf label gateway 100 according to an exemplary embodiment in the present disclosure may include a data storing unit 110, a signal processing unit 120, a controlling unit 130, and a communicating unit 140.

The data storing unit 110 may store original data (source data) including product information to be transmitted to the plurality of electronic shelf label devices. Here, the product information may include a variety of information relevant to a product such as a product name, product price, a manufactured date, an expiration date, a manufacturer, and the like.

The signal processing unit 120 may encode the original data to generate an encoded data packet. Here, the encoding technique is not particularly limited and a low-density parity check (LDPC) encoding technique may be used by way of example.

As an example, the signal processing unit 120 may divide the original data into a plurality of subgroup packets based on a code rate set depending on a communications channel environment and encode the plurality of subgroup packets with a LDPC code, thereby generating the encoded data packet.

As an implementation example, the signal processing unit 120 may include a packet managing unit 121 and an encoding unit 122.

The packet managing unit 121 may divide the original data into the plurality of subgroup packets based on the code rate set depending on the communications channel environment.

In addition, the encoding unit 122 may encode the plurality of subgroup packets with the LDPC code, thereby generating the encoded data packet.

Here, the reason for dividing the original data is to allow the electronic shelf label device having the limited memory capacity to receive the data without loss.

The controlling unit 130 may control transmission of the encoded data packet so that a first multicast, a second multicast, and a unicast of the encoded data packet are sequentially performed until all of the plurality of connected electronic shelf label devices successfully receive the encoded data packet.

In the respective exemplary embodiments in the present disclosure as described above, the first multicast of the encoded data packet to all of the connected electronic shelf label devices may be performed, and in a case in which the transmission fails, the second multicast of the encoded data packet to an electronic shelf label device which has failed to receive the encoded data packet may be performed again, and in a case in which the transmission fails once again, a unicast of the encoded data packet to the electronic shelf label device having failed in the reception thereof may be performed.

Positive attributes obtained by sequentially performing the first multicast, the second multicast, and the unicast until the encoded data packet is successfully transmitted to all of the electronic shelf label devices as described above will be described.

As an example, in the case in which a single multicast is performed and a single unicast is then only performed, the multicast needs to continuously be performed until the majority of electronic shelf label devices successfully receive the data packet at the time of performing the multicast, in order to perform the unicast in which only a small number of predetermined electronic shelf label devices want to participate. To this end, since the electronic shelf label gateway needs to continuously transmit a relatively large number of packets so that the majority of electronic shelf label devices may successfully receive the packets and the electronic shelf label devices perform a decoding, subsequent to receiving a final packet transmitted in the multicast; the electronic shelf label device should be maintained in a power-on state for a long period of time in order to receive the final packet transmitted in the multicast. As a result, a total amount of energy consumption of the electronic shelf label device may be increased.

However, in accordance with an exemplary embodiment in the present disclosure, in the case in which the multicast is performed in two operations, an effect in which the electronic shelf label devices are divided into two groups may be obtained, such that total energy consumption of the electronic shelf label devices may be reduced. In detail, since the majority of electronic shelf label devices in a good wireless environment may receive all packets necessary for the decoding in a first multicast and may not be in a power-on state any more subsequently to receiving and decoding the packet, they may enter a power-off state, thereby reducing the energy consumption in the electronic shelf label devices. On the other hand, since only a portion of the electronic shelf label devices which has not received the packets necessary for the decoding in the first multicast participates in a second multicast, the number of electronic shelf label devices in the power-on state may be reduced.

The communicating unit 140 may wirelessly transmit the encoded data packet according to controlling by the controlling unit 130.

As an example, the controlling unit 130 may firstly perform the first multicast of the encoded data packet to the plurality of connected electronic shelf label devices through the communicating unit 140. Next, in the case in which the electronic shelf label devices having failed to receive the encoded data packet via the first multicast through the communicating unit 140 are present, the controlling unit 130 may perform the second multicast of the encoded data packet to the corresponding electronic shelf label devices. In addition, in the case in which the electronic shelf label devices having failed to receive the encoded data packet via the second multicast through the communicating unit 140 are present, the controlling unit 130 may perform a unicast to the corresponding electronic shelf label devices.

In this case, the controlling unit 130 may receive a non-acknowledgment (NACK) signal from the electronic shelf label device having failed to receive the encoded data packet subsequently to performing the first multicast and the second multicast, so as to confirm the reception failure of the encoded data packet.

The plurality of respective electronic shelf label devices 200 may determine the reception failure of the encoded data packet subsequently to performing a low-density parity check (LDPC) decoding process of the encoded data packet transmitted from the electronic shelf label gateway 100.

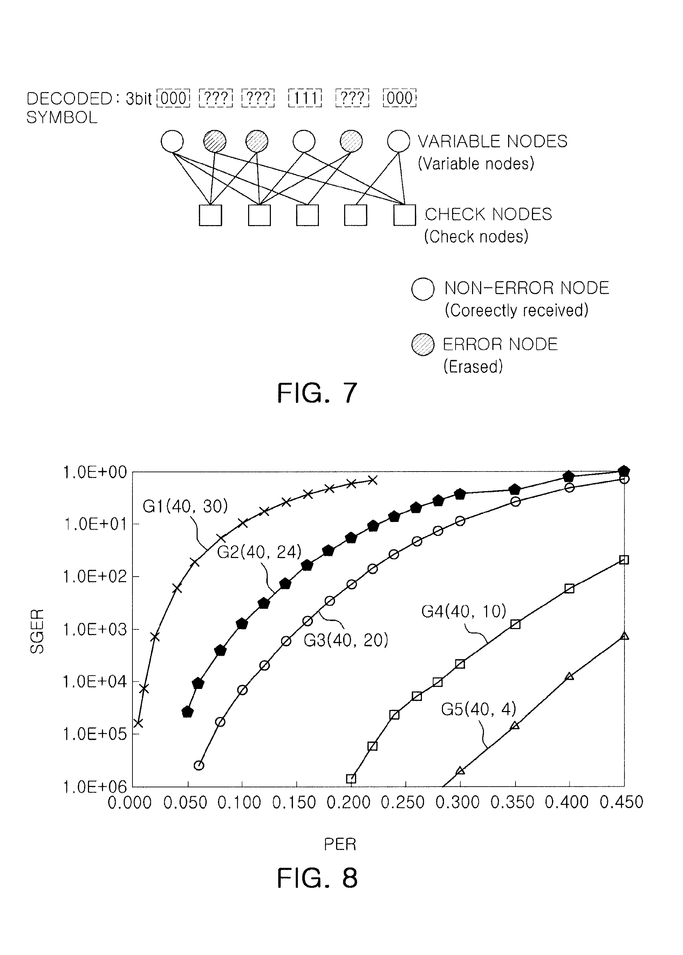

As described above, the reasons of encoding the data packet by a technique such as the LDPC in a transmission process and decoding the data packet by a technique such as the LDPC in a reception process is that when a serially message-passing algorithm is applied to the LDPC technique, errors may be recovered even in the case in which errors are included in the received data, thereby reducing the number of required transmissions. The serially message-passing algorithm will be described with reference to FIG. 7 below.

FIG. 3 is a block diagram of the electronic shelf label device according to an exemplary embodiment in the present disclosure.

Referring to FIG. 3, the electronic shelf label device 200 may include a communicating unit 210, a signal processing unit 220, a controlling unit 230, and a data storing unit 240.

The communicating unit 210 may wirelessly receive the encoded data packet from the electronic shelf label gateway 100 and may provide the encoded data packet to the signal processing unit 220.

The signal processing unit 220 may determine whether the decoding is a success or a failure by decoding the encoded data packet received through the communicating unit 210. Here, in the case in which the received data include many error bits, the restoration may not be normally performed in the decoding process.

As an example, the signal processing unit 220 may determine the reception failure of the encoded data packet depending on whether or not the encoded data packet may be restored to the original data subsequently to performing the low-density parity check (LDPC) decoding process of the encoded data packet transmitted from the electronic shelf label gateway 100. A process of restoring the original data associated with that described above will be described with reference to FIG. 7.

The controlling unit 230 may inform the electronic shelf label gateway 100 whether the reception is a success or a failure, via the communicating unit 210, according to whether or not the decoding is a success or a failure by the signal processing unit 220.

As an example, in the case in which the decoding is a failure, the controlling unit 230 may transmit the NACK signal to the electronic shelf label gateway 100 through the communicating unit 210. In addition, in the case in which the decoding is success, the controlling unit 230 may transmit an acknowledgment (ACK) signal to the electronic shelf label gateway 100 through the communicating unit 210.

In addition, the data storing unit 240 may store the data received from the electronic shelf label gateway, information relevant to an operation of the electronic shelf label device, and the like.

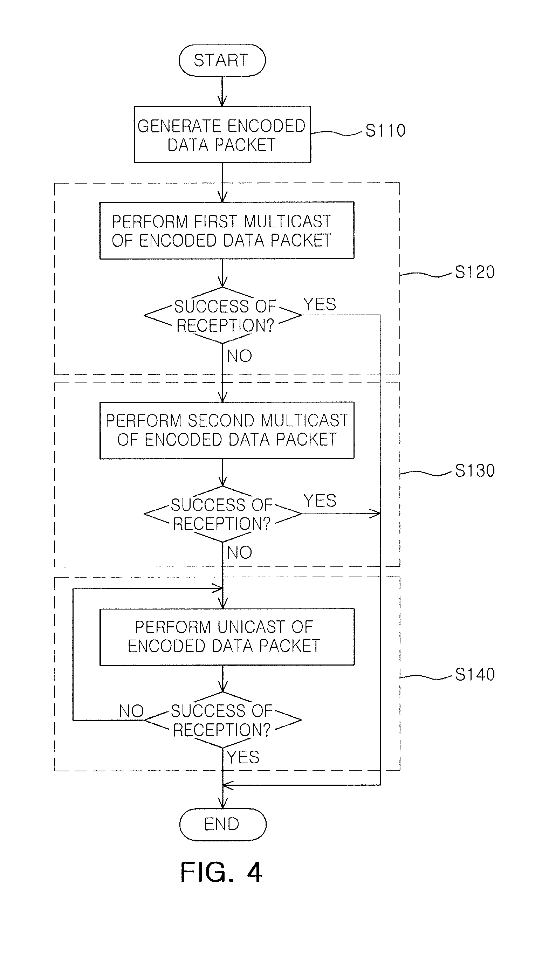

FIG. 4 is a flowchart illustrating a communications method of an electronic shelf label gateway according to an exemplary embodiment in the present disclosure.

A communications method of an electronic shelf label gateway according to an exemplary embodiment in the present disclosure will be described with reference to FIGS. 1 through 4.

Hereinafter, in describing the communications method of the electronic shelf label gateway according to an exemplary embodiment in the present disclosure, the operations described above with reference to FIGS. 1 through 3 may be applied thereto. Therefore, an overlapping description will be omitted.

S110 to S140 illustrated in FIG. 4 may be performed in the electronic shelf label gateway 100.

First, in S110, an encoded data packet may be generated by encoding original data.

In S120, a first multicast of the encoded data packet to the plurality of connected electronic shelf label devices may be performed. The plurality of respective electronic shelf label devices may determine whether the reception of the encoded data packet is a success or a failure and may transmit a response signal including the determination result to the electronic shelf label gateway 100.

In S130, in the case in which the electronic shelf label devices having failed to receive the encoded data packet via the first multicast are present, a second multicast of the encoded data packet to the corresponding electronic shelf label devices may be performed. Then, the corresponding electronic shelf label devices may determine whether the reception of the encoded data packet is a success or a failure and may transmit a response signal including the determination result to the electronic shelf label gateway 100.

In S140, in the case in which the electronic shelf label devices having failed to receive the encoded data packet via the second multicast are present, the encoded data packet may be transmitted to the corresponding electronic shelf label devices in a unicast. Subsequently, the corresponding electronic shelf label devices may determine whether the reception of the encoded data packet is a success or a failure and may transmit a response signal including the determination result to the electronic shelf label gateway 100.

In the respective operations described above, the electronic shelf label devices which have succeeded in receiving the encoded data packet may perform a sleep mode until a next encoded data packet is transmitted thereto, whereby power consumption may be reduced.

As an example, the operation (S110) of generating the encoded data packet will be described below in detail.

First, the original data may be divided into a plurality of subgroup packets based on a code rate set depending on communications channel environment.

Next, the plurality of subgroup packets may be encoded with the LDPC code to be generated as the encoded data packet.

As an example, sizes of the subgroup packets and the number of subgroup packets based on the code rate may be set as illustrated in the following Table 1.

**[Table 1]**

| (n,k) Code | Code Rate (k/n) | Subgroup Size(k) | Number of Subgroups |
|---|---|---|---|
| (40,30) | 0.75 | 30 | 10 |
| (40,24) | 0.6 | 24 | 12 |
| (40,20) | 0.5 | 20 | 15 |
| (40,10) | 0.25 | 10 | 29 |
| (40,4) | 0.1 | 4 | 72 |

Referring to Table 1, a code rate suitable for a first operation may be selected according to a channel state of a respective electronic shelf label device as in Table 1. In the case in which the code rate is 0.5 when a total of data packets to be transmitted are 288, if a (40,20) (the number of encoded data packets, a size of a subgroup (the number of data packets of each subgroup)) code is used, since the number of subgroups is 15, the entire data may be transmitted to the electronic shelf label device through 15 transmissions of a subgroup unit.

Subsequently to performing the first multicast and the second multicast described above, the reception failure of the encoded data packet may be confirmed by whether or not the NACK signal is received from the electronic shelf label devices.

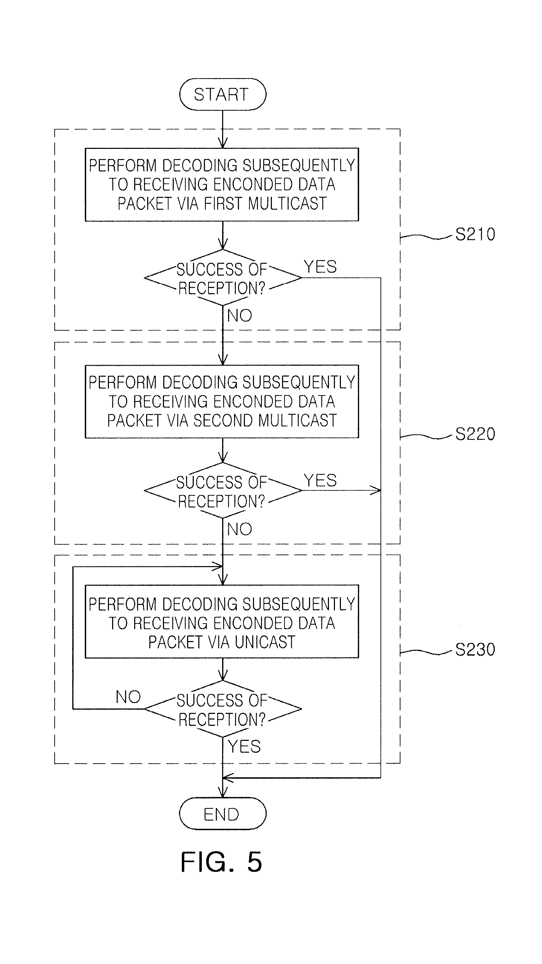

FIG. 5 is a flowchart illustrating a communications method of an electronic shelf label device according to an exemplary embodiment in the present disclosure.

S210 to S230 illustrated in FIG. 5 may be performed in the electronic shelf label device 200.

In S210, in the case of the first multicast, the respective electronic shelf label devices may receive and decode the encoded data packet and may inform the electronic shelf label gateway whether the reception is a failure or a success depending on whether the decoding is a failure or a success.

In S220, in the second multicast, the respective electronic shelf label devices having failed to receive the encoded data packet may again receive and decode the encoded data packet and may inform the electronic shelf label gateway whether the reception is a failure or a success depending on whether the decoding is a failure or a success.

In S230, in the case of the unicast, each of the respective electronic shelf label devices having failed to receive the encoded data packet may again receive and decode the encoded data packet and may inform the electronic shelf label gateway whether the reception is a failure or a success depending on whether the decoding is a failure or a success.

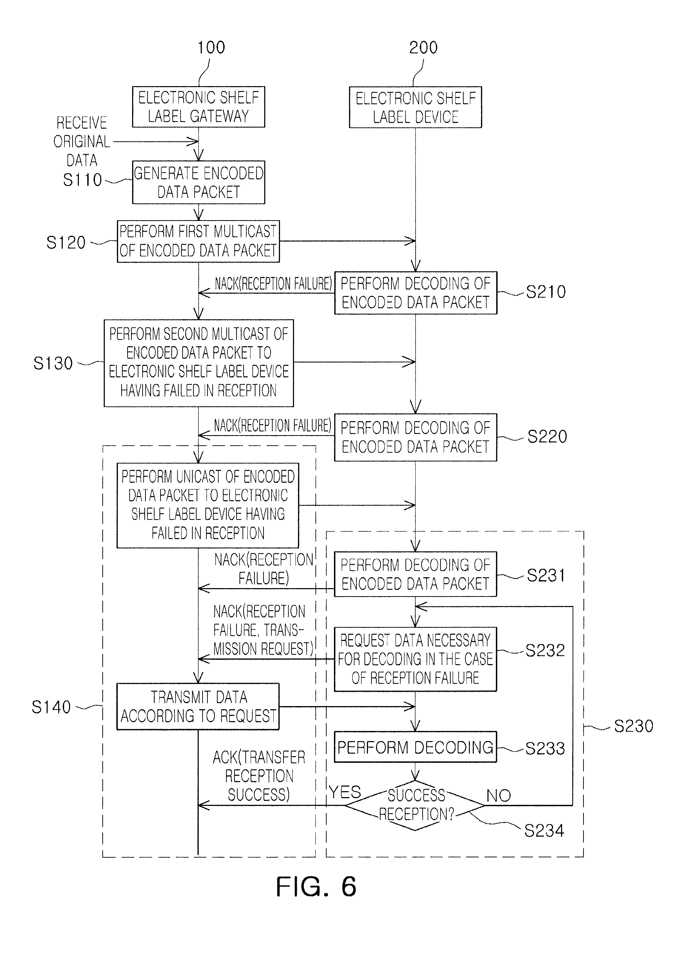

FIG. 6 is a flowchart illustrating a communications method of an electronic shelf label system according to an exemplary embodiment in the present disclosure.

S110 to S140 illustrated in FIGS. 4 through 6 may be performed by the electronic shelf label gateway 100, and S210 to S230 illustrated in FIGS. 4 through 6 may be performed by the electronic shelf label device 200.

In S110, the electronic shelf label gateway may generate the encoded data packet by encoding the original data at a code rate suitable for a channel environment.

In S120, the electronic shelf label gateway may perform the first multicast of the encoded data packet to the plurality of connected electronic shelf label devices.

In S210, in the case of the first multicast, the respective electronic shelf label devices may receive and decode the encoded data packet and may inform the electronic shelf label gateway whether the reception is a failure or a success depending on whether the decoding is a failure or a success.

In S130, in the case in which the electronic shelf label devices having failed to receive the encoded data packet via the first multicast are present, a second multicast of the encoded data packet to the corresponding electronic shelf label devices may be performed.

In S220, in the second multicast, the respective electronic shelf label devices having failed to receive the encoded data packet may again receive and decode the encoded data packet and may inform the electronic shelf label gateway whether the reception is a failure or a success depending on whether the decoding is a failure or a success.

In S140, in the case in which the electronic shelf label devices having failed to receive the encoded data packet via the second multicast are present, the encoded data packet may be transmitted to the corresponding electronic shelf label devices in a unicast.

In addition, in S230, in the unicast, each of the electronic shelf label devices having failed to receive the encoded data packet may again receive and decode the encoded data packet and may inform the electronic shelf label gateway whether the reception is a failure or a success depending on whether the decoding is a failure or a success.

FIG. 7 is a diagram illustrating a sequential message transmitting algorism used for an LDPC according to an exemplary embodiment in the present disclosure.

An example of a process of recovering error of the encoded data packet received by the electronic shelf label device will be described with reference to FIG. 7.

For example, a case in which the low-density parity check (LDPC) technique is used as a decoding technique according to an exemplary embodiment in the present disclosure and the serially message-passing algorithm is applied to recover the error in the LDPC technique will be described.

For example, when it is defined that the encoded data packet received by the electronic shelf label device is a decoded symbol configured of a plurality of 3 bits, in a case in which a rule between variable nodes and check nodes corresponding to the decoded symbol is defined as that one check node configured of 3 bits becomes "0" by performing exclusive OR (XOR) between bits corresponding to positions of values of connected variable nodes, the value of the check node of 3 bits may be sequentially founded for each 1 bit one by one according to the above-mentioned rule, thereby recovering error in data.

For example, in the case in which an error rate of the received decoded symbol is within a recoverable range, it may be determined that the decoded symbol may be received. In the case in which the error rate of the received decoded symbol is outside the recoverable range, it may be determined as failure in the reception of the decoded symbol.

FIG. 8 is a graph illustrating a packet error rate vs. error rate of subgroup depending on a code rate according to an exemplary embodiment in the present disclosure.

Referring to FIG. 8 and Table 1, G1(40,30) (corresponding to (40,30) code of Table 1) of FIG. 8 is a relationship graph of the packet error rate (PER) vs. the error rate of subgroup (SPER) in a case of generating 30 data packets with 40 decoded symbols. G2(40,24) (corresponding to (40,24) code of Table 1) of FIG. 8 is a relationship graph of the packet error rate (PER) vs. the error rate of subgroup (SPER) in a case of generating 24 data packets with 40 decoded symbols. G3(40,20) (corresponding to (40,20) code of Table 1) of FIG. 8 is a relationship graph of the packet error rate (PER) vs. the error rate of subgroup (SPER) for a case of generating 20 data packets with 40 decoded symbols. G4(40,10) (corresponding to (40,10) code of Table 1) of FIG. 8 is a relationship graph of the packet error rate (PER) vs. the error rate of subgroup (SPER) in a case of generating 10 data packets with 40 decoded symbols. In addition, G5(40,4) (corresponding to (40,4) code of Table 1) of FIG. 8 is a relationship graph of the packet error rate (PER) vs. the error rate of subgroup (SPER) in a case of generating 4 data packets with 40 decoded symbols.

Referring to the graphs G1 to G5 illustrated in FIG. 8 and the code rates of Table 1, when the packet error rate (PER) and a required error rate of subgroup (SPER) in the communications environment of the electronic shelf label gateway according to an exemplary embodiment in the present disclosure are defined, the code rate suitable for the PER and the SPER may be determined.

As set forth above, according to exemplary embodiments in the present disclosure, in the system using the electronic shelf label device having the limited lifespan of the battery and the limited memory capacity, the number of data packet transmission times may be reduced, lifespan-shortening of the battery of the electronic shelf label device may be prevented, and efficient data transmission may be obtained.

While exemplary embodiments have been shown and described above, it will be apparent to those skilled in the art that modifications and variations could be made without departing from the scope of the present invention as defined by the appended claims.

## Claims

1. An electronic shelf label gateway, comprising:
a data storing unit storing original data;
a signal processing unit generating an encoded data packet by encoding the original data;
a controlling unit controlling transmission of the encoded data packet to sequentially perform a first multicast, a second multicast, and a unicast of the encoded data packet until all of a plurality of connected electronic shelf label devices successfully receive the encoded data packet; and
a communicating unit wirelessly transmitting the encoded data packet according to controlling by the controlling unit.

2. The electronic shelf label gateway of claim 1, wherein the signal processing unit divides the original data into a plurality of subgroup packets based on a code rate set depending on a communications channel environment and encodes the plurality of subgroup packets with a low-density parity check (LDPC) code to generate the encoded data packet.

3. The electronic shelf label gateway of claim 1, wherein the controlling unit controls a first multicast of the encoded data packet to the plurality of connected electronic shelf label devices, controls a second multicast of the encoded data packet to corresponding electronic shelf label devices when the corresponding electronic shelf label devices having failed to receive the encoded data packet via the first multicast are present, and controls a unicast to a corresponding electronic shelf label device when the corresponding electronic shelf label device having failed to receive the encoded data packet via the second multicast is present.

4. The electronic shelf label gateway of claim 3, wherein the controlling unit confirms the reception failure of the encoded data packet by receiving a non-acknowledgement signal from the electronic shelf label device having failed to receive the encoded data packet subsequently to the first multicast and the second multicast.

5. An electronic shelf label system, comprising:
an electronic shelf label gateway wirelessly transmitting an encoded data packet; and
a plurality of electronic shelf label devices connected to the electronic shelf label gateway through a wireless communications network and receiving the encoded data packet,
wherein the electronic shelf label gateway includes:
a data storing unit storing original data;
a signal processing unit generating the encoded data packet by encoding the original data;
a controlling unit controlling transmission of the encoded data packet to sequentially perform a first multicast, a second multicast, and a unicast of the encoded data packet until all of the plurality of connected electronic shelf label devices successfully receive the encoded data packet; and
a communicating unit wirelessly transmitting the encoded data packet according to controlling by the controlling unit.

6. The electronic shelf label system of claim 5, wherein the signal processing unit comprises:
a packet managing unit dividing the original data into a plurality of subgroup packets, based on a code rate set depending on a communications channel environment; and
an encoding unit encoding the plurality of subgroup packets with a low-density parity check (LDPC) code to generate the encoded data packet.

7. The electronic shelf label system of claim 5, wherein the controlling unit controls a first multicast of the encoded data packet to the plurality of connected electronic shelf label devices, controls a second multicast of the encoded data packet to corresponding electronic shelf label devices when the correspondingn electronic shelf label devices having failed to receive the encoded data packet via the first multicast are present, and controls a unicast to a corresponding electronic shelf label device when the corresonding electronic shelf label device having failed to receive the encoded data packet via the second multicast is present.

8. The electronic shelf label system of claim 7, wherein the controlling unit confirms the reception failure of the encoded data packet by receiving a non-acknowledgement signal from the electronic shelf label device having failed to receive the encoded data packet subsequently to the first multicast and the second multicast.

9. An electronic shelf label system, comprising:
an electronic shelf label gateway generating an encoded data packet in which original data is encoded with a low-density parity check (LDPC) code, and wirelessly transmitting the encoded data packet; and
a plurality of electronic shelf label devices connected to the electronic shelf label gateway through a wireless communications network to receive the encoded data packet,
wherein the electronic shelf label gateway includes:
a data storing unit storing the original data;
a signal processing unit generating the encoded data packet by encoding the original data with a code rate suitable for a channel environment;
a controlling unit controlling transmission of the encoded data packet to sequentially perform a first multicast, a second multicast, and a unicast of the encoded data packet until all of the plurality of connected electronic shelf label devices successfully receive the encoded data packet; and
a communicating unit wirelessly transmitting the encoded data packet according to controlling by the controlling unit, and
the plurality of respective electronic shelf label devices determine a reception failure of the encoded data packet subsequently to performing a low-density parity check decoding process of the encoded data packet transmitted by the electronic shelf label gateway.

10. The electronic shelf label system of claim 9, wherein the signal processing unit comprises:
a packet managing unit dividing the original data into a plurality of subgroup packets, based on a code rate set depending on a communications channel environment; and
an encoding unit encoding the plurality of subgroup packets with the low-density parity check (LDPC) code to generate the encoded data packet.

11. The electronic shelf label system of claim 9, wherein the controlling unit controls a first multicast of the encoded data packet to the plurality of connected electronic shelf label devices, controls a second multicast of the encoded data packet to corresponding electronic shelf label devices when the correspodning electronic shelf label devices having failed to receive the encoded data packet via the first multicast are present, and controls a unicast to a corresponding electronic shelf label device when the correspnding electronic shelf label device having failed to receive the encoded data packet via the second multicast is present.

12. The electronic shelf label system of claim 9, wherein the controlling unit confirms the reception failure of the encoded data packet by receiving a non-acknowledgement signal from the electronic shelf label device having failed to receive the encoded data packet subsequently to the first multicast and the second multicast.

13. A communications method of an electronic shelf label gateway, the communications method comprising:
generating an encoded data packet by encoding original data;
performing a first multicast of the encoded data packet to a plurality of connected electronic shelf label devices;
when electronic shelf label devices having failed to receive the encoded data packet via the first multicast are present, performing a second multicast of the encoded data packet to corresponding electronic shelf label devices; and
when electronic shelf label devices having failed to receive the encoded data packet via the second multicast are present, transmitting the encoded data packet to corresponding electronic shelf label devices in a unicast scheme.

14. The communications method of claim 13, wherein the generating of the encoded data packet comprises:
dividing the original data into a plurality of subgroup packets, based on a code rate set depending on a communications channel environment; and
encoding the plurality of subgroup packets with a low-density parity check (LDPC) code to generate the encoded data packet.

15. The communications method of claim 13, wherein subsequently to the first multicast and the second multicast, the reception failure of the encoded data packet is confirmed by whether or not a non-acknowledgement signal is received from the electronic shelf label devices.
